# EUROPEAN PATENT SPECIFICATION

(11) **EP 2 188 538 B1**
(45) Date of publication and mention of the grant of the patent: **07.05.2014**
(21) Application number: 08803899.7
(22) Date of filing: 09.09.2008
(51) Int. Cl.: F16B 25/10, F16B 25/00

(54) **SELF-TAPPING DRILLING SCREW, SPECIALLY SUITABLE FOR THIN SHEET METAL**
GEWINDEFORMENDE UND SELBSTSCHNEIDENDE SCHRAUBE, INSBESONDERE FÜR DÜNNE BLECHTEILE
VIS DE PERÇAGE AUTO-TARAUDEUSE, PARTICULIÈREMENT ADAPTÉE AUX FEUILLES DE MÉTAL MINCES

(30) Priority: 12.09.2007 IT MC20070178
(43) Date of publication of application: 26.05.2010
(73) Proprietor: V.I.C. - Viterie Italia Centrale S.R.L., 60044 Fabriano (AN) (IT)
(72) Inventor: DE ANGELIS, Enrico, I-62024 Matelica (MC) (IT)
(74) Representative: Baldi, Claudio
(86) International application number: PCT/EP2008/061931
(87) International publication number: WO 2009/034078

(56) References cited:
- EP-B- 0 464 071
- DE-U1- 29 801 813
- GB-A- 1 115 989
- US-A- 2 520 232

## Description

The present invention relates to a self-tapping drilling screw, specially suitable for thin sheet metal.

The term "thin sheet metal" is generally used to refer to sheet metal with thickness lower than three millimetres.

The problem experienced when screwing a screw on thin sheet metal is determined by the low thickness of the sheet metal, since only part of the thread is held on the sheet metal thickness.

For this reason, different solutions have been proposed according to the known art, which consist in partially bending (by drawing) the edges of the sheet metal that surround the screw along the penetration direction of the screw so that the screw can hold several threads on the sheet metal.

The bending by drawing of the edges of the sheet metal that surround the screw is performed in different ways.

A first case of screws of the known art is disclosed in patent EP 0 464 071. The screw of the known art is generically composed of a head, a threaded body, a tip and a cylindrical area between the threaded body and the tip. More precisely, the said screw of known type is provided with a threaded stem with adjacent cylindrical section that is connected with a tapered perforation part that ends with a rounded tip, with surface able to develop friction during the rotation of the screw against the sheet metal in such a way that the sheet metal is overheated and brought to plastic state to favour perforation and bending of the sheet metal.

The major drawback encountered during the use of these self-tapping drilling screws is represented by the considerable axial pressure that must be given to the screw to cause drawing.

This characteristic depends on the fact that the part of the stem designed to draw the sheet metal is not given a helicoidal shape that would allow to use part of the torque applied to the screw to deform the sheet metal.

This limitation requires a great effort for the operator in the case when the assembly is performed with pneumatic or traditional electric screwers, or considerable investments for the realisation of automatic or automated screwing installations designed to exert the necessary pressure during screwing.

Another drawback encountered during the use of these self-tapping drilling screws of known type consists in the fact that an annular ridge of material is formed on the side of the sheet metal facing the head of the screw, projecting from the surface.

For simplicity purposes, the phenomenon related with the formation of such an annular protuberance is hereinafter defined as "volcano effect".

After overheating the sheet metal to bring it to a plastic state, the sheet metal is perforated by the drilling section that ends with a rounded friction surface.

In this phase a hole similar to a jet is formed, extending both above and under the sheet metal, with the only difference that the length of the jet hole facing the forward direction of the screw is approximately double than the length of the collar formed on the side of the sheet metal facing the head of the screw. The collar around the hole stops the head of the screw at the end of the screwing travel, thus preventing the head of the screw from engaging directly against the flat surface of the sheet metal.

In order to avoid this inconvenience, the head of the screw must be provided with an annular groove designed to receive the annular ridge, although it appears evident that the need to provide the annular groove involves higher production costs.

The purpose of the present invention is to devise a self-tapping drilling screw for thin sheet metal that does not require high axial pressure during screwing and is able to avoid the so-called "volcano effect", in such a way that the edges of the holes drilled on the sheet metal are only bent towards the penetration direction, originating a jet hole that develops only from the side of the sheet metal opposite the side where the head of the screw is engaged. The present invention relates to a self-tapping drilling screw that comprises a threaded body, a head and a tip, in which the tip preferably has an ogival profile, with decreasing diameter from the vertex of the tip towards the threaded body and is joined to the threaded body without interruption.

The preferably ogival tip comprises two sections with different surface finish: the surface of the first ending section is machined in such a way to generate heat by friction, and the surface of the second section has a stepped profile with spiral helicoidal development.

When the screw is driven into rotation with a high number of revolutions, preferably higher than 1000 rpm, the ogival tip progressively heats the sheet metal by friction, bringing it to a plastic state that favours perforation and modelling of the edges of the hole drilled by the stepped section with spiral helicoidal development.

In view of the above, the sheet metal is only deformed towards the surface opposite the head of the screw, without generating the "volcano effect", that is to say without generating an annular ridge on the side opposite to the insertion direction of the screw.

Another great advantage of the present invention is given by the low pressure that must be exerted on the screw during screwing in order to allow drilling and, most of all, drawing of the sheet metal.

Unlike other screws that are currently available on the market, the screw of the invention is characterised by a stepped profile with spiral helicoidal development, capable of drawing the sheet metal in the screwing direction, most of all because of the torque exerted on the screw during screwing, generally with the use of a pneumatic or electric screwer.

Compared to equivalent products that are currently on the market, this feature requires a lower effort for the operator during assembly.

Another purpose of the present invention is to devise a self-tapping drilling screw for thin sheet metal provided with the aforementioned features, characterised by low production costs, due to the fact that it does not require additional secondary machining operations to generate the forming portion of the end of the stem, in addition to normal threading obtained by rolling. Further advantageous characteristics of the present invention are the object of the enclosed claims and subclaims.

The present invention will be better understood with reference to the enclosed drawings of an executive embodiment.
- Fig. 1 is a view of the screw of the present invention;
- Fig. 2 is an enlarged view of fig. 1.
- Figs. 3, 4, 5 and 6 illustrate the perforation of the sheet metal and the shaping of the hole where the self-tapping screw is screwed.
- Figs. 7 to 11 illustrate different constructive embodiments of the screw of the invention.

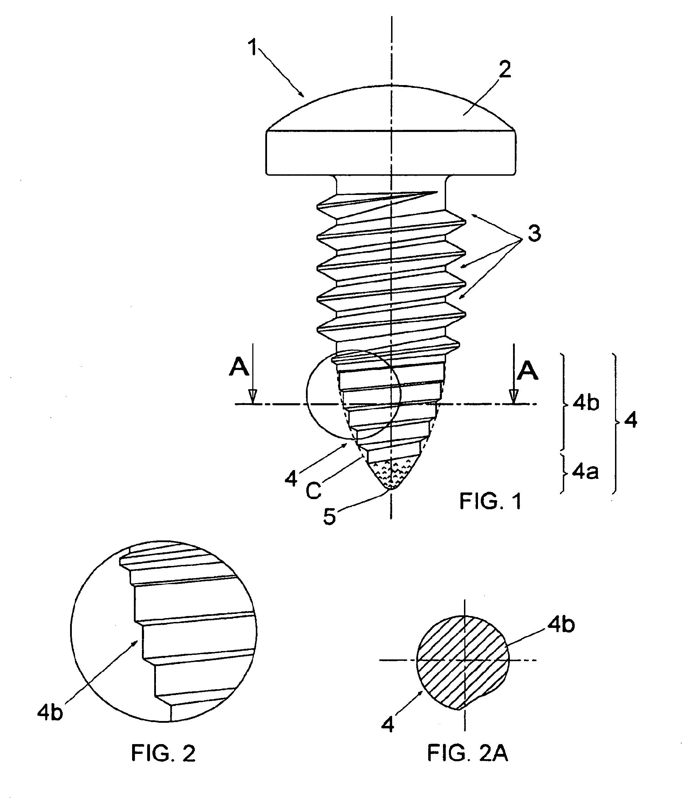

With reference to figs. 1 and 2 , the screw (1) of the invention comprises a head (2), a threaded body (3), and an ogival tip (4).

The threaded body (3) has basically a constant diameter.

The tip (4) has an ogival shape that ends with a vertex (5).

The diameter of the ogival tip (4) increases progressively and continuously starting from the vertex (5) to the threaded body (3), to which the ogival profile is connected, without interruption, that is to say without the interposition of cylindrical sections with smooth surface.

The ogival tip (4) comprises two sections with different surface finish.

The first section (4a) with lower length is the ending section that ends with the vertex (5) and is provided with a surface machined in such a way to generate heat by friction.

This surface is obtained by rolling when the thread is obtained on the body (3). It must be noted that the screw (1) is obtained by cold plastic deformation according to a traditional technology in which the semi-finished screw (which consists in a generally smooth stem and a head) is obtained by extrusion and coining and then threaded, generally by means of rolling.

The said first section (4a) is joined without interruption with a second section (4b), characterised in that it has a stepped profile with spiral helicoidal development.

The first section (4a) is only designed to overheat the sheet metal by friction until it reaches a plastic state, and the second section (4b) is designed to shape the edges of the hole drilled on the sheet metal in such a way to give a jet profile to the hole, which protrudes from the sheet metal only on the side opposite the one where the head (2) of the screw (1) is engaged.

Also the stepped shape of the second section (4b) is obtained during the threading of the body (3), thus saving on production costs since the surface of the body (3) and of the two sections (4a and 4b) of the ogival tip (4) are shaped differently during the same machining phase.

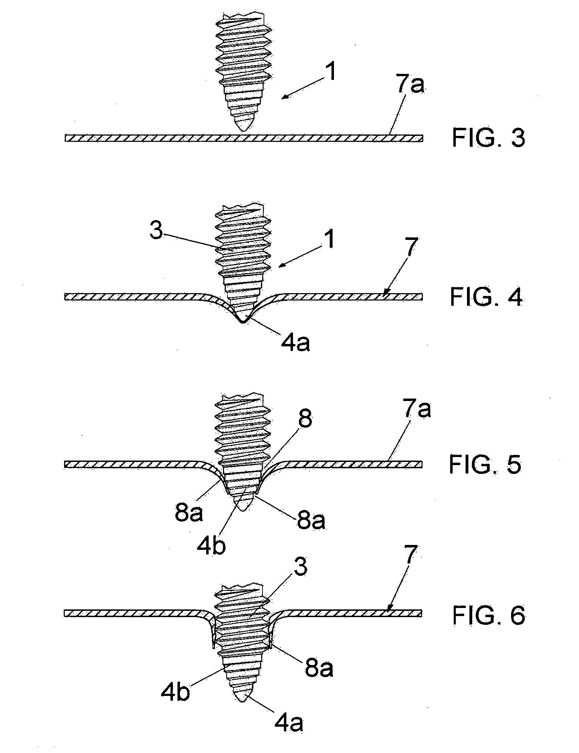

Figs. 3, 4, 5 and 6 illustrate the advantages obtained with the screw of fig. 1. In fig. 3 the vertex (5) of the screw (1) basically touches the sheet metal (7).

In fig. 4 the screw (1) is driven in high rotation and, because of the friction surface of the distal section (4a), the tip (4) generates heat that increases the temperature of the sheet metal and plasticizes the sheet metal, which is first subjected to a sort of drawing with progressive reduction of its thickness (see fig. 4) until it is perforated.

As soon as the hole (8) is created, its edges (8a) interact with the second section (4b), which is able to expand the hole (8) progressively, bending the edges (8a) towards the penetration direction of the screw (1), without transporting any material towards the side (7a) of the sheet metal (7) facing the head of the screw.

This phenomenon is due to the fact that the head (4) comprises the second section (4b) provided with stepped profile with spiral helicoidal development. The enlarged view of fig. 2 shows that, according to the preferred embodiment, the stepped profile with spiral helicoidal development is preferably inscribed within the envelope curve (C) that represents the extension of the ogival profile of the distal section (4a).

Fig. 6 illustrates the formation of the thread on the sheet metal (7) by the threaded body (3) of the screw (1).

The removal of sliver for the formation of the thread on the sheet metal (7) is null or almost null since the heating of the sheet metal due to friction plasticizes the sheet metal, especially in the area of the sheet metal that surrounds the hole (8).

This gives the advantage of having a good number of threads on the sheet metal, ensuring stable strong fixing, with the head (2) of the screw (1) directly engaged on the flat surface (7a) of the sheet metal (7), which is not subjected to the undesired "volcano effect".

As mentioned earlier, although the ogival shape of the tip (4) is the preferred shape, a different shape may be used, while leaving the aforementioned advantages unchanged.

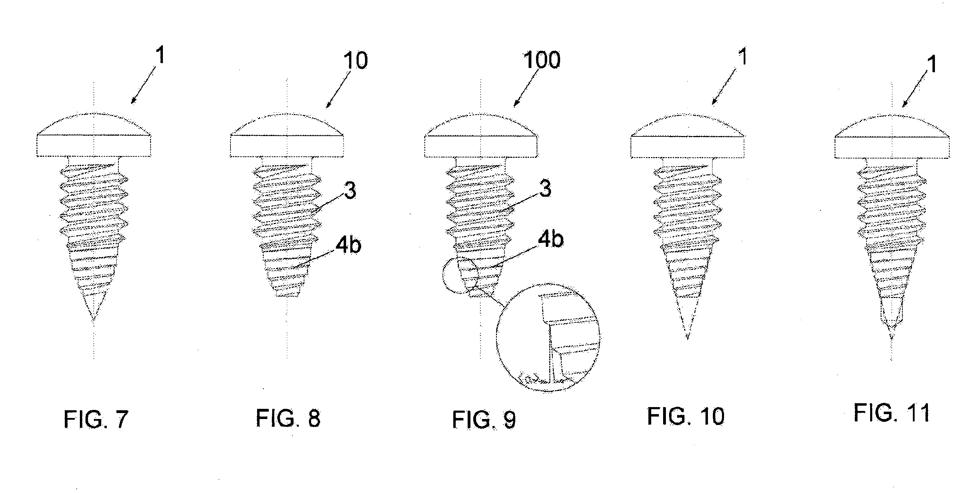

Figs. 7, 10 and 11 illustrate three different versions in the self-tapping drilling screw of the invention, where the tip (4) is not of ogival shape: in particular, in fig. 7 the distal section (4a) of the tip (4) has a conical profile; in fig. 10 the entire tip (4) has a conical profile, and in fig. 11 the stepped section with spiral heicoidal development (4b) is inscribed in a conical envelope surface, and the distal section (4a) has a cylindrical profile with conical tip.

Also a self-tapping, not drilling, version of the screw is provided by the present invention, designed to be used on sheet metal that has been pre-drilled.

In this case the drilling section (4a) of the tip (4) is not present, while the section (4b) characterised by the stepped profile with spiral helicoidal development is present, being designed to draw the sheet metal to increase the engagement surface of the thread of the screw.

The screw (10) shown in fig. 8 is basically identical to the one of fig. 1, except for the fact that the drilling distal end (4a) is not present.

The screw (100) shown in fig. 9 is basically identical to the one of fig. 1, except for the fact that the drilling distal end (4a) is not present and the helicoidal steps of the section (4b) have a coning angle (α).

## Claims

1. Screw of the type comprising a head (2), a threaded body (3) and a tip (4), **characterised in that** the tip (4) comprises at least one section (4b) which has a stepped profile with a spiral helicoidal development or configuration.

2. Screw as claimed in the above claim, **characterised in that** the tip (4) comprises two consecutive sections with different shape and surface finish:
- the first distal section (4a), which ends with a vertex (5), provided with a surface designed to generate heat by friction
- the second section (4b), which has a stepped profile with spiral helicoidal development.

3. Screw as claimed in the above claim, **characterised in that** the first section (4a) is shorter than the second section (4b).

4. Screw as claimed in the above claim, **characterised in that** the first section (4a) is joined without interruption with the second section (4b).

5. Screw as claimed in one or more of the above claims, **characterised in that** the section (4b), which has a stepped profile with spiral helicoidal development, is inscribed in an envelope curve (C) that represents the extension of the profile of the distal section (4a).

6. Screw as claimed in one or more of the above claims, **characterised in that** the tip (4) is joined without interruption with the threaded body (3).

7. Screw as claimed in one or more of the above claims, **characterised in that** the second section (4b) is joined without interruption with the threaded body (3).

8. Screw as claimed in one or more of the above claims, **characterised in that** the threaded body (3) has a constant diameter.

9. Screw as claimed in one or more of the above claims, **characterised in that** the tip (4) has an ogival shape.

10. Screw as claimed in one or more of claims 1 to 8, **characterised in that** the tip (4) has a conical shape.

11. Screw as claimed in one or more of claims 1 to 8, **characterised in that** the distal section (4a) of the tip (4) has a conical shape, and the adjacent section (4b), which has a stepped profile with spiral helicoidal development, is inscribed in an ogival envelope curve.

12. Screw as claimed in one or more of claims 1 to 8, **characterised in that** the distal section (4a) of the tip (4) has a cylindrical shape with tip, and the adjacent section (4b), which has a stepped profile with spiral helicoidal development, is inscribed in a conical envelope curve.

13. Screw as claimed in one or more of the above claims, **characterised in that** the helicoidal steps of the section (4b) have a coning angle (α).

## Patentansprüche

1. Schraube des Typs umfassend einen Kopf (2), einen Gewindekörper (3) und eine Spitze (4), **dadurch gekennzeichnet, dass** die Spitze (4) mindestens einen Abschnitt (4b) umfasst, der ein stufenförmiges Profil mit einem Verlauf bzw. einer Ausgestaltung in Form einer schraubenförmigen Spirale aufweist.

2. Schraube nach dem vorstehenden Anspruch, **dadurch gekennzeichnet, dass** die Spitze (4) zwei aufeinanderfolgende Abschnitte unterschiedlicher Form und Oberflächenbeschaffenheit umfasst:
- den ersten distalen Abschnitt (4a), der in einem Scheitelpunkt (5) endet und dessen Oberfläche in der Lage ist, Reibungswärme zu erzeugen,
- den zweiten Abschnitt (4b), der ein stufenförmiges Profil mit einem Verlauf in Form einer schraubenförmigen Spirale aufweist.

3. Schraube nach dem vorstehenden Anspruch, **dadurch gekennzeichnet, dass** der erste Abschnitt (4a) kürzer als der zweite Abschnitt (4b) ist.

4. Schraube nach dem vorstehenden Anspruch, **dadurch gekennzeichnet, dass** der erste Abschnitt (4a) ohne Unterbrechung mit dem zweiten Abschnitt (4b) verbunden ist.

5. Schraube nach einem oder mehreren der vorstehenden Ansprüche, **dadurch gekennzeichnet, dass** der Abschnitt (4b) mit stufenförmigem Profil mit einem Verlauf in Form einer schraubenförmigen Spirale in einer Hüllkurve (C) einbeschrieben ist, die eine Verlängerung des Profils des distalen Abschnitts (4a) darstellt.

6. Schraube nach einem oder mehreren der vorstehenden Ansprüche, **dadurch gekennzeichnet, dass** die Spitze (4) ohne Unterbrechung mit dem Gewindekörper (3) verbunden ist.

7. Schraube nach einem oder mehreren der vorstehenden Ansprüche, **dadurch gekennzeichnet, dass** der zweite Abschnitt (4b) ohne Unterbrechung mit dem Gewindekörper (3) verbunden ist.

8. Schraube nach einem oder mehreren der vorstehenden Ansprüche, **dadurch gekennzeichnet, dass** der Gewindekörper (3) einen konstanten Durchmesser aufweist.

9. Schraube nach einem oder mehreren der vorstehenden Ansprüche, **dadurch gekennzeichnet, dass** die Spitze (4) eine spitzovale Form aufweist.

10. Schraube nach einem oder mehreren der Ansprüche von 1-8, **dadurch gekennzeichnet, dass** die Spitze (4) eine kegelige Form aufweist.

11. Schraube nach einem oder mehreren der Ansprüche von 1-8, **dadurch gekennzeichnet, dass** der distale Abschnitt (4a) der Spitze (4) eine kegelige Form aufweist, während der angrenzende Abschnitt (4b) mit stufenförmigem Profil mit einem Verlauf in Form einer schraubenförmigen Spirale in einer spitzovalen Hüllkurve einbeschrieben ist.

12. Schraube nach einem oder mehreren der Ansprüche von 1-8, **dadurch gekennzeichnet, dass** der distale Abschnitt (4a) der Spitze (4) die Form eines Zylinders mit Dorn aufweist, während der angrenzende Abschnitt (4b) mit stufenförmigem Profil mit einem Verlauf in Form einer schraubenförmigen Spirale in einer kegeligen Hüllkurve einbeschrieben ist.

13. Schraube nach einem oder mehreren der vorstehenden Ansprüche, **dadurch gekennzeichnet, dass** die schraubenförmigen Stufen des Abschnitts (4b) einen Konizitätswinkel (α) aufweisen.

## Revendications

1. Vis du type comprenant une tête (2), un corps fileté (3) et une pointe (4), **caractérisée en ce que** ladite pointe (4) comprend au moins un segment (4b) qui présente un profil en gradins ayant un développement ou une configuration hélicoïdale en spirale.

2. Vis selon la revendication précédente, **caractérisée en ce que** ladite pointe (4) comprend deux segments contigus ayant forme et finition superficielle différentes :
- le premier distal (4a), terminant par un sommet (5), qui présente une surface apte à générer de la chaleur par frottement
- le second (4b), qui présente un profil en gradins ayant un développement hélicoïdal en spirale.

3. Vis selon la revendication précédente **caractérisée en ce que** le premier segment (4a) est plus court par rapport au deuxième segment (4b).

4. Vis selon la revendication précédente **caractérisée en ce que** ledit premier segment (4a) se rattache sans interruption avec ledit second segment (4b).

5. Vis selon l'une ou plusieurs des revendications précédentes, **caractérisée en ce que** ledit segment (4b), ayant un profil en gradins avec développement hélicoïdal en spirale, résulte inscrit dans une courbe d'enveloppe (C), qui constitue le prolongement du profil du segment distal (4a).

6. Vis selon l'une ou plusieurs des revendications précédentes, **caractérisée en ce que** ladite pointe (4) est rattachée sans interruption au dit corps fileté (3).

7. Vis selon l'une ou plusieurs des revendications précédentes, **caractérisée en ce que** ledit second segment (4b) est rattaché sans interruption au dit corps fileté (3).

8. Vis selon l'une ou plusieurs des revendications précédentes, **caractérisée en ce que** ledit corps fileté (3) présente un diamètre constant.

9. Vis selon l'une ou plusieurs des revendications précédentes, **caractérisée en ce que** ladite pointe (4) a un profil en ogive.

10. Vis, selon l'une ou plusieurs des revendications de 1 à 8, **caractérisée en ce que** ladite pointe (4) a un profil en forme de cône.

11. Vis, selon l'une ou plusieurs des revendications de 1 à 8, **caractérisée en ce que** ledit segment distal (4a) de la pointe (4) a un profil en forme de cône, tandis que le segment contigu (4b), ayant un profil en gradins avec développement hélicoïdal en spirale, résulte inscrit dans une courbe d'enveloppe en ogive.

12. Vis, selon l'une ou plusieurs des revendications de 1 à 8, **caractérisée en ce que** ledit segment distal (4a) de la pointe (4) a profil en forme de cylindre avec pointe, tandis que le segment contigu (4b), ayant un profil en gradins avec développement hélicoïdal en spirale, résulte inscrit dans une surface d'enveloppe conique.

13. Vis selon l'une ou plusieurs des revendications précédentes, **caractérisée en ce que** les gradins hélicoïdaux du dit segment (4b) présentent un angle de conicité (α).
